# EUROPEAN PATENT SPECIFICATION

(11) **EP 3 545 202 B1**
(45) Date of publication and mention of the grant of the patent: **02.09.2020**
(21) Application number: 17790769.8
(22) Date of filing: 26.10.2017
(51) Int. Cl.: F16B 12/20

(54) **IMPROVED DEVICE FOR JOINING PARTS OF FURNITURE AND FURNISHING ACCESSORIES**
VERBESSERTE VORRICHTUNG ZUM VERBINDEN VON MÖBELTEILEN UND MÖBELZUBEHÖR
DISPOSITIF AMÉLIORÉ POUR ASSEMBLER DES PIÈCES DE MEUBLES ET ACCESSOIRES D'AMEUBLEMENT

(30) Priority: 24.11.2016 IT 201600119077
(43) Date of publication of application: 02.10.2019
(73) Proprietor: Häfele Berlin GmbH & Co KG, 12307 Berlin (DE)
(72) Inventor: GIOVANNETTI, Antonio, 20090 Segrate (IT)
(74) Representative: Kohler Schmid Möbus Patentanwälte
(86) International application number: PCT/EP2017/077383
(87) International publication number: WO 2018/095686

(56) References cited:
- DE-A1-102009 043 179
- US-B1- 6 299 397

## Description

The present invention relates to an improved device for joining parts of furniture and furnishing accessories according to the preamble of claim 1.

Such a device is known from DE 10 2009 043 179 A1.

More particularly the present invention relates to a device suitable for assembling furniture and/or furnishing accessories of the shelf unit, bookcase, drawer unit, bed frame, seating type and the like.

As is known, furniture and furnishing accessories are made increasingly frequently by stably and removably joining single parts which will go to define the overall assembly represented, for example, by a bookcase or by a shelf unit, by a chair or by any other item of furniture not made in a single piece but defined by an assembly of single parts.

Such a kit structure entails considerable advantages linked, for example, to a facility of transport of structures, even bulky ones, to the possibility of mounting of the furniture directly on site or, likewise, to the possibility of transport and assembly also by non-expert users.

The retaining elements used to join one to the other the different components or single parts of the furniture are defined, for example, by tie rods or bushings, cams and similar means.
Referring by way of an example to an item of furniture of the bookcase type or to a shelf unit, it comprises typically two vertical uprights tendentially parallel one to the other between which are interposed, along a plane perpendicular to the plane of longitudinal development of the uprights, one or more shelves having the function of defining a plane of resting and support for books, magazines, vases and/or other multiple and different objects.

The assembly of the structure of the frame and of the shelves with respect to said frame can be performed using retaining means represented by bushings or cams inserted in the thickness of the shelves (or of the uprights) and co-operating in clamping with corresponding pins or screws inserted in the uprights (or in the shelves) and which, actuated by means of an appropriate tool (screwdriver or Allen key or the like), cause the rotation of the bushing or of the cam so as to form the restraining of said pin or screw with respect to said bushing or cam.

However these clamping or restraint means entail some major disadvantages linked to the need to form grooves for housing components in cooperation (bushing and screw or pin) in the thickness of the parts in reciprocal coupling (both in the shelves and in the uprights).

Moreover said clamping means entail longer times of assembly since the operative has to insert the bushing or the cam and the screw or pin in the respective seats and, subsequently, act on the screw or pin to perform the clamping.

In order to solve these disadvantages other ways of removable joining have been developed which provide for the use of expansion joints apt to be inserted in the thickness of the uprights or of the shelves, with said joints which comprise an expansion bushing typically made in plastic material and a screw inserted coaxially to said bushing and, likewise, an eccentric bushing inserted in a groove formed in the thickness of one of the parts to be joined and apt to couple with the screw or pin of the expansion joint. The reciprocal clamping between the two components of the furniture takes place by acting with a tool which acts on the eccentric bushing which, rotating, imposes a backward movement of the pin with respect to the bushing wherein the pin is inserted with a consequent radial expansion of the same bushing.

However these traditional expansion joints also entail some major disadvantages linked to the fact that they comprise elements to be inserted in both the parts to be assembled with the consequent need to form suitable grooves and seats in said parts of the furniture.

A further disadvantage is linked to longer assembly times, in that the user has to insert the elements of the expansion joint in the seats of the parts to be joined and, subsequently, has to act on the eccentric bushing to impose the movement of the pin and the consequent expansion of the bushing in its seat.

A further disadvantage is represented by the fact that a possible loosening of the eccentric bushing entails a consequent movement of the pin and a return into a non-expanded position of the bushing of the pin and this may cause an inevitable loosening of the clamping restraint between the parts of the furniture.

DE 10 2009 043 179 A1 discloses a connecting device for detachably connecting a first component to a second component, which has a first anchoring device for anchoring the connecting device in the first component and a second anchoring device for anchoring the connecting device in the second component. The first anchoring device comprises a first spreading device with at least one first expandable element and the second anchoring device a second spreading device with at least one second expandable element. The connection device comprises an actuating device for jointly actuating the first spreading device and the second spreading device.

Further, US 6 299 397 B1 discloses an elongate fastener provided for securing a pair of panels together. The panels include respective bores therein. Each end of the fastener includes an expansible end portion thereon which is arranged to be received within the respective bore. A wedge member is mounted within each expansible end portion for longitudinal sliding movement between a disengaged position and an engaged position, wherein the expansible end portions are expanded relative to the disengaged position. An actuator is located centrally between the expansible end portions for pivotal movement about an actuator axis which lies perpendicularly to a longitudinal axis of the fastener. The fastener permits a pair of panels to be mounted with one end of one panel abutted against the other panel wherein the actuator is accessible from a recessed installation aperture on an inner face of one of the panels. The resulting joint is secure while being hidden from view using a one-piece fastener.

The object of the present invention is that of obviating the disadvantages stated above.

More particularly an object of the invention is that of providing a joining device for parts of furniture and furnishing accessories which allows a simultaneous attachment to the two parts of the item of furniture to be joined.

A further object of the present invention is that of providing a joining device for parts of furniture and furnishing accessories which, when assembled, is single-part and comprises a reduced number of components, such as to be highly economical.

A further object of the present invention is that of providing a joining device which allows the reduction in the number of machining processes to be performed on the parts to be reciprocally assembled.

A further object of the present invention is that of providing a joining device which guarantees optimal clamping between the assembled parts and does not involve possible risks of loosening of this clamping.

A further object of the present invention is that of providing a joining device which allows a reduction in the times of assembly together with an easy, convenient and rapid assembly and disassembly of the component parts of the item of furniture (for example the mounting of shelves in a bookcase).

A further object of the present invention is that of making available to users a joining device for parts of furniture or furnishing accessories suitable for guaranteeing a high level of resistance and reliability in time and such, moreover, as to be able to be easily and economically manufactured.

These and other objects are achieved by the device of the invention that has the features of claim 1.

Advantageous embodiments of the invention are apparent from the dependent claims.

The constructional and functional features of the joining device for parts of furniture or furnishing accessories of the present invention will be made clearer by the following detailed description, in which reference is made to the accompanying drawings which illustrate an embodiment thereof given solely by way of a nonlimiting example and in which:
Figure 1 shows schematically a blown-up axonometric view of the device for joining parts of furniture or furnishing accessories of the present invention; according to one of its first embodiments;
Figure 2 shows schematically an axonometric view of the device of the invention assembled;
Figure 3 is a plan view from above of the device of Figure 2;
Figure 4 is a view from the left-hand side of Fig. 3;
Figures 5, 6 and 7 are axonometric views, partially sectioned, of the device of Figure 2 shown in successive phases of actuation and comprising the actuation tool;
Figure 8 shows schematically an axonometric view of an item of furniture assembled using joining devices of the invention, with said item of furniture partially sectioned to illustrate the arrangement of one of said joining devices;
Figures 9 and 10 illustrate schematically two enlarged details of the joining device of the invention, said enlarged details representing two phases of clamping between the parts of the item of furniture of Figure 8 after the coupling of said parts;
Figure 11 is a blown-up axonometric view like that of Figure 1, showing a second embodiment of the device for joining parts of furniture or furnishing accessories of the present invention;
Figures 12 and 13 are axonometric views, partially sectioned, of the device of Figure 11 assembled, shown respectively in position of rest and of use.

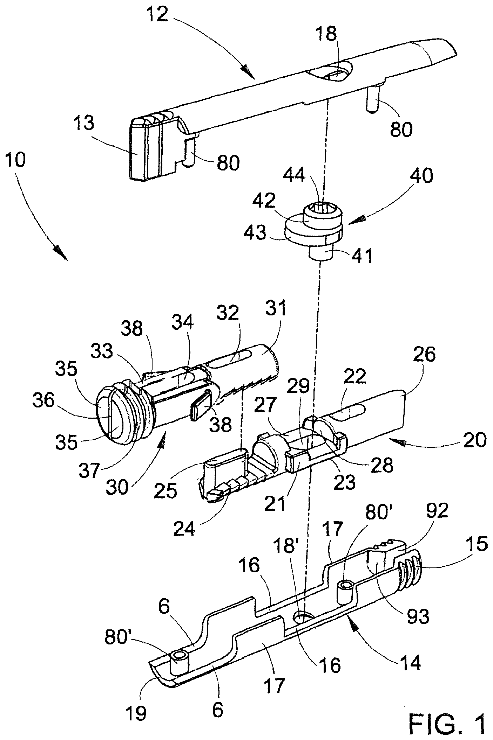

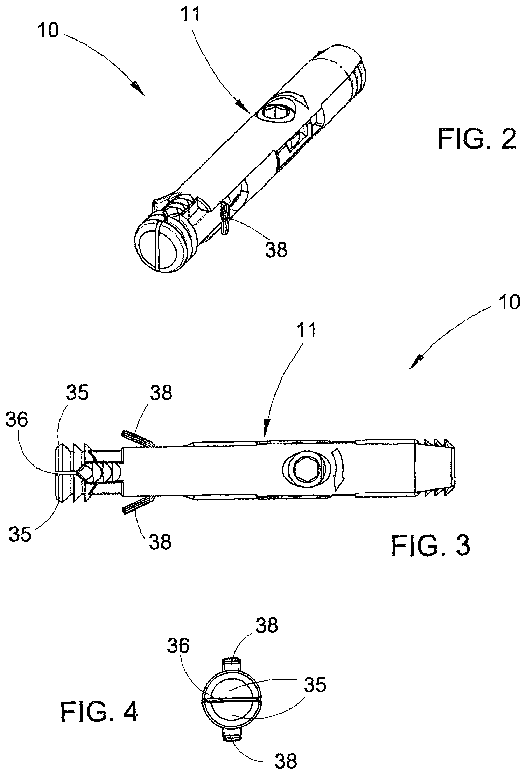

Referring to Figures 1-10, the joining device for parts of furniture or furnishing accessories of the present invention, denoted overall by 10 in the aforesaid drawings, comprises a casing or container body 11 with a substantially cylindrical shape, defined by an upper element 12 and by a lower element 14, which here below shall also be referred to as half-shells, although their shape is substantially different, as will be seen here below. The half-shells 12 and 14 are made preferably in plastic material or in another suitable material and have a different hardness. More particularly, the lower half-shell 14 is in a plastic which has a certain flexibility, while the upper half-shell 12 is in hard plastic, for the purposes to be mentioned.

The two half-shells are joined one to the other by means of a connection of the snap-fit type obtained by providing a pair of pegs 80 in the upper half-shell 12 which snap-couple with a corresponding pair of tubular elements or holes 80' provided in the lower half-shell 14. Naturally other systems of attachment between the two half-shells can be provided, for example a screw or grub screw, by gluing or with another known and suitable method of connection.

Following the coupling between the aforementioned half-shells 12 and 14, the container body 11 has at said first end or front end 90 a wedge 13 which projects below from the upper half-shell 12 and is arranged beyond the front profile 19 of the lower half-shell 14, while at a second end or rear end 91 it has a vertical slit 92 formed in the lower half-shell 14, bordered by opposite externally serrated portions 15, determining a zone of expansion. Inside the lower half-shell 14 opposite slanting walls 93 are provided, for connection or entrance to said slit 92 for the objects to be mentioned here below.

The upper half-shell 12 and the lower half-shell 14 have, respectively, a through opening or hole 18 and 18', in the embodiment shown in different sizes, whose function will appear clearer here below.

In order to complete the description of the container body 11, as can be seen from the drawings, the lower half-shell 14 has large windows 16 on its opposite side walls with cylindrical shape 17, at said hole 18'. Moreover said side walls 17 do not reach the front end 19 of the lower half-shell 14, determining in this zone side openings 6 of the container body 11, once the upper half-shell 12, which acts as cover, has been assembled on the lower half-shell 14.

Inside the casing or container body 11 are housed the other components apt to perform the clamping between the parts of the furniture as described here below and comprising:
- a slider 20;
- an expansion bushing 30; and
- a cam mechanism 40.

The slider 20 has a cylindrical stem shape, such as to be housed internally and coaxially to the lower half-shell 14 of the casing or container body 11. It has a first slot 21 placed approximately centrally and coaxially to the aforementioned holes 18, 18' of the half-shells 12, 14, and a second slot 22, apt to accommodate one of said peg 80/tubular element 80' connection pairs placed in the rear part of the container body (11). Both slots 21 and 22 have a longitudinal or axial development, so as to allow a sliding of the slider 20 inside the container body 11, as will be explained in greater detail here below.

Laterally to the first slot or central slot 21 respective opposite protuberances 23 are provided, apt to position in the aforementioned windows 16 of the side walls 17 of the lower half-shell 14. The length of the protuberances 23 is smaller than the width of the windows 16, so as to allow an axial sliding guided by the slider 20 of the container body 11.

The slider 20 has a flattened front end (that is, on the side turned towards the front end 90 of the container body 11) 24, wherefrom a ridge 25 projects upwards. The rear opposite end 26 of the slider 20 is instead wedge-shaped.

The expansion bushing 30 has a cylindrical shank 31, flattened below, having a longitudinal or axial slot 32, apt to receive the aforesaid protuberance 25 of the slider 20, such that, in mounted condition, the slider 20 and the expansion bushing 30 remain integral one with the other, as if they were a single part.

A pair of opposite side wings 33 project at the front from the shank 31, between which an empty space 34 is formed, longitudinally extending and apt to house the other peg 80/tubular element 80' connection pair placed in proximity of the front part of the container body 11.

Said opposite wings 33 end frontally with respective thickened portions 35, separated by a slit 36 and provided externally with teeth 37, developing in a radial direction.

At the base of connection of the wings 33 to the cylindrical shank 31 respective flexible tabs 38 are provided, slightly diverging towards the front end of the device.

As mentioned, the slider 20 and the expansion bushing 30, in mounted condition of use, are integral one with the other and could therefore be made in a single part.

However, in order to simplify production and for the different tasks by the two components, it is advantageous to make them in separate parts. More particularly, the slider 20, which has to have a certain rigidity, is made in metal material, such as for example zamak, or in hard plastic, while the expansion bushing 30 is made advantageously in soft or elastic plastic.

The cam mechanism 40 has a lower cylindrical section 41, an upper cylindrical section 42 of greater diameter or smaller height, and a central section 43 projecting radially, determining a cam profile.

The lower section 41 is apt to traverse the central slot 21 of the slider 20 and to insert itself in the hole 18' provided on the base wall of the lower half-shell 14, while the upper cylindrical section 42 goes to be housed in the hole 18 of greater diameter provided in the upper half-shell or cover 12. The central section with cam profile 43 is arranged instead in a hollowed seat 27 of the slider 20, on a level with said opposite lateral protuberances 23, limited longitudinally by opposite shoulders 28, 29 against which the cam profile 43 acts.

In the upper cylindrical section 44 a shaped seat 44 is provided, apt to hold a tool 50 (not shown in Figure 1) for the actuation of the cam mechanism as will be described here below.

The shaped seat 44 could possibly be replaced by a through shaped hole to allow the actuation of the cam both from above and from below.

In this respect it is noted that the terms lower and upper used in this description are referred to the arrangement shown in the drawings, it being possible to mount the joining device overturned in the parts of furniture to be joined with respect to what is illustrated, to allow an actuation of the cam from below, and therefore in a less visible position.

The assembly of the components of the device is fairly simple and intuitive.

Once the slider 20, the expansion bushing 30 and the cam mechanism 40 are housed in the lower half-shell 14, as mentioned previously, with the slider 20 and the expansion bushing 30 integral one with the other, for the engagement of the protuberance 25 of the slider in the slot 32 of the bushing, the assembly is locked by applying the upper half-shell 12 on the lower half-shell 14, with the wedge protuberance 13 which goes to insert in the seat or free space 34 between the opposite wings 33 of the expansion bushing 30.

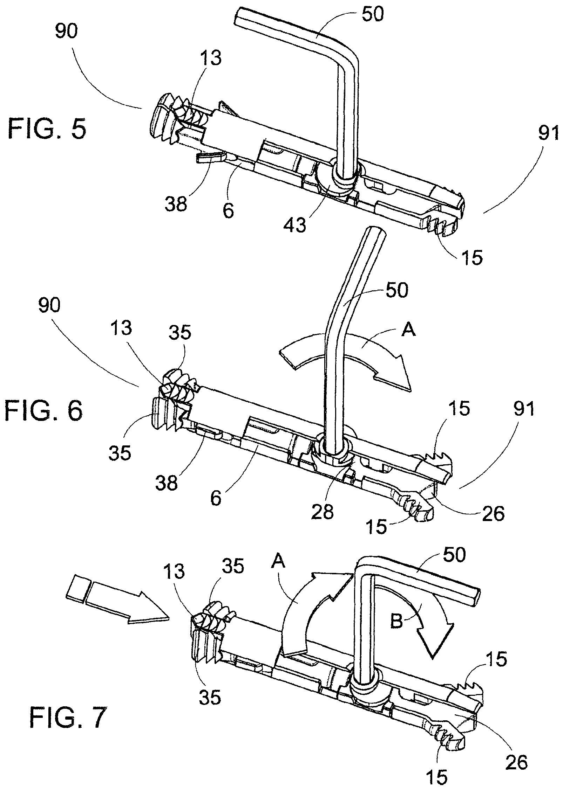

The functioning of the joining device according to the invention is now illustrated, referring in particular to Figures 5 to 7.

Figure 5 shows the rest configuration of the device with the tool 50 inserted in the seat 44 of the cam mechanism 40.

In this configuration the slider 20, and with it the expansion bushing 30, are in the more advanced position on the side of the front end 90 of the container body 11, and held in this position by the cam profile 43 which acts with its more projecting part against the shoulder 29 of the slider 20.

Figure 6 shows an intermediate configuration of first actuation displacement of the device of the invention.

More particularly, as indicated by the arrow A, by means of the tool 50 a rotation is imposed, preferably, through 90°, on the cam mechanism 40, as a consequence whereof the cam profile 43 goes to act against the shoulder 28, opposite the shoulder 29, causing a backward movement of the slider 20 and of the expansion bushing 30.

During this movement the wedge-shaped rear part 26 of the slider 20 slides against the slanted walls 93 of entrance to the slit 92, causing a widening of the same and therefore the expansion of the externally serrated portions 15 of the lower half-shell 14, which determine the locking of the device in one of the two furniture parts to be joined.

At the same time the backward movement of the slider 20 means that the wedge protuberance 13 of the upper half-shell 12 penetrates the crack 36 between the thickened end parts 35 of the wings 33, causing the expansion thereof, and therefore the locking of the upper part of the item of furniture to be joined, also exerting a certain traction on the same.

Figure 7 shows a final configuration of a second movement of the joining device of the invention.

As indicated by the arrow B, by means of the tool 50 a further rotation is imposed, preferably again through 90°, of the cam mechanism 40, with which a further backward sliding of the cursor 20 is produced, producing a further backward movement of the expansion bushing 30, and optionally a further expansion both of the bushing 30 and of the externally serrated parts 15, thus causing a stable clamping of the parts of the item of furniture to be joined.

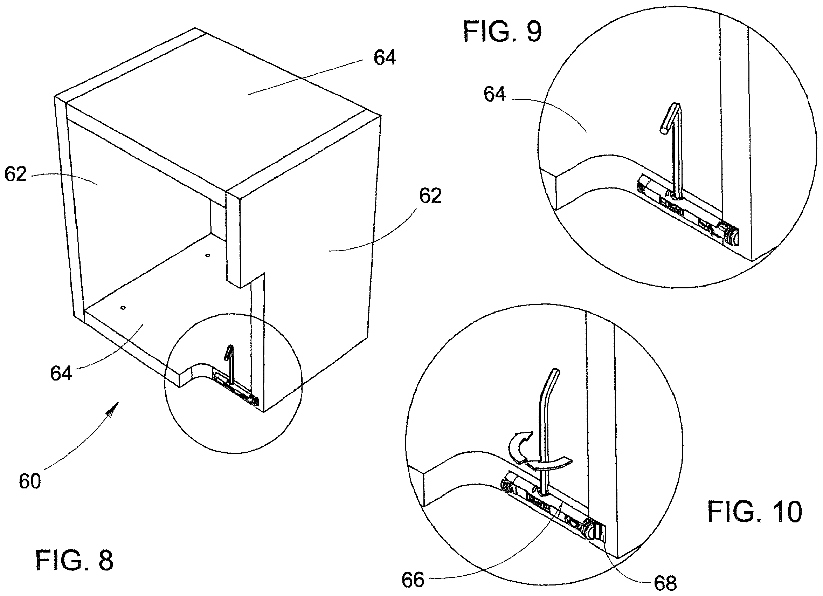

Figures 8 - 10 illustrate an example of an item of furniture assembled using the joining devices 10 according to the invention.

Figure 8 shows an axonometric view of an item of furniture 60 comprising two opposite and parallel shoulders 62 and two shelves 64 interposed between said opposite shoulders, perpendicular to them and parallel one to the other.

In the thickness of the shelves 64 grooves or pockets 66 are formed, having the function of housing the joining devices 10 of the invention, inserted in said grooves or pockets with the front portion of the bushing 30 which projects externally from said pocket and is apt to be inserted in a further pocket 68 formed in the thickness of the shoulders 62.

For correct insertion of the device 10 in a corresponding pocket 66 of the shelf 64, frontally to the shelf a milling can be formed for the passage of said flexible tabs 38 of the expandable bushing 30. The tabs 38 act therefore as orientation for the device 10.

Should frontally to the shelf 64 the abovementioned milling not be formed, during the insertion of the device 10 in the corresponding pocket 66 the flexible tabs 38 in any case would bend towards the interior on the corresponding wings 33, remaining within the maximum perimeter footprint of the device, and therefore not constituting any obstacle to the insertion of the device of the pocket 66.

As can be seen in Figure 8, in the shelves 64 holes 70 are likewise provided, formed perpendicularly to the axis of the grooves or pockets 66 and having the function of allowing the insertion of the tool 50 which couples with the shaped seat 44 of the cam mechanism 20 to perform the clamping action.

Figures 9 and 10 show two enlarged details of a portion of the item of furniture 60 assembled using the joining device of the invention and wherein the device 10, inserted in a groove or pocket 66 of a shelf 64, is shown in the rest configuration with the front portion of the expansion bushing 30 inserted in the pocket 68 of the shoulder 62 of the item of furniture (detail of Figure 9) and in the final configuration of second movement wherein the expansion bushing, following the action of expansion and of traction exerted by the slider 20, performs the clamping with respect to the walls of the pocket 68 and, consequently, the rigid and stable connection of the shelf 64 with respect to the shoulder 62.

In fact, during the two successive rotations of the cam mechanism 40 the expansion of the opposite externally serrated end rear portions 15 is imposed with consequent locking of the device 10 of the groove or pocket 66 in the shelf 64 and the simultaneous expansion and retraction of the expansion bushing 30, which performs an action of clamping with radial stress with respect to the groove or pocket 68 with simultaneous traction stress between the two components of the item of furniture, defining in this way a stable clamping between the parts without the risk of loosening of the restraint.

In the above mention was made of two successive rotations through 90° of the cam mechanism 40 by means of the tool 50, but it is clear that the movement of the cam mechanism 40 can be single and continuous over an arc of 180°, as shown in the accompanying drawings, or also over a smaller arc.

The optional disassembly of the item of furniture can be implemented by imposing, by means of the tool 50, a rotation in an opposite direction to that of the phase of assembly/clamping, so as to bring the device into the rest configuration. In this case, if required, the device 10 can also be extracted from the groove or pocket 66 of the shelf, where it is no longer restrained for the return into the non-expanded position of the opposite serrated portions 15.

From what has been disclosed the advantages appear clear of the joining device for parts of furniture and furnishing accessories according to the invention, which does not need auxiliary components to perform the clamping, and which with a one-direction movement of the slider 20 produces the expansion of the rear serrated parts 15 and the simultaneous expansion and backward movement of the expansion bushing 30.

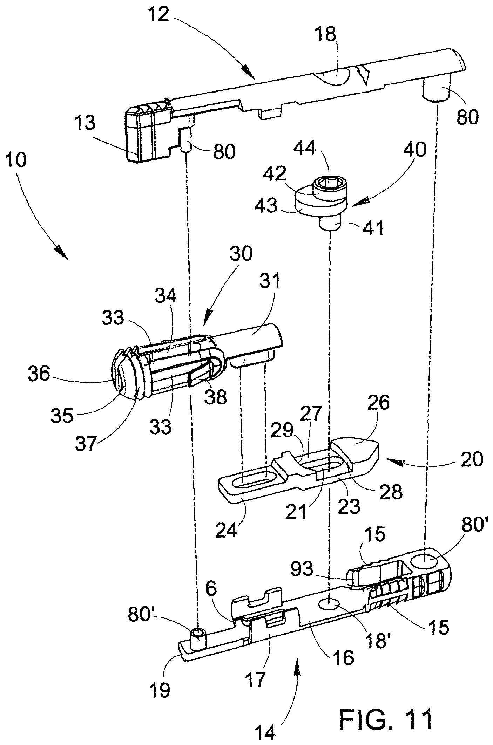

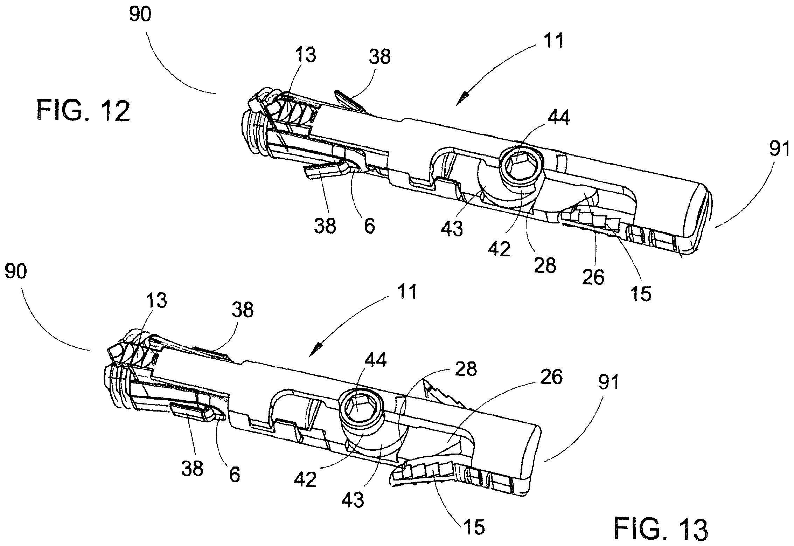

A brief description is now given of the embodiment illustrated in Figures 11-13 using the same reference numerals as the embodiment described hitherto to distinguish the same or corresponding parts.

This embodiment differs from the previous one substantially due to the fact that the rear end 91 of the container body 11 is closed and the expansion zone is determined by a pair of externally serrated wings 15 oriented towards the front end 90 and having entrance chamfers 93 for widening by means of the wedge 26 of the slider 20. Such a shape and orientation of the wings 15 allows a better anchorage of the corresponding seat 66 following expansion, in that the ends of the wings tend to abut against the wall of the seat by way of anchor, preventing sliding in the same in the case of traction forces.

In this case the slider 20 is shorter than the previous one in order to go and engage with the wings 15, and is not provided with the slot 22 which served for the passage of the tubular element 80', which is replaced here by a hole, again denoted by 80', provided at the end 91 of the slider, with which there is engaging of the corresponding peg 80.

In this embodiment it has likewise been provided to reverse the positions of the ridge 25 and of the longitudinal slot 32, providing the slot 32 on the slider 20 and the ridge 25 projecting below from the expansion bushing 30. It is clear that in each of the embodiments illustrated the positions of the aforesaid elements can be reversed.

Naturally the invention is not limited to the particular embodiments previously described and illustrated in the accompanying drawings, but numerous detailed changes may be made thereto, within the reach of the person skilled in the art, without thereby departing from the scope of the invention itself as defined by the appended claims.

## Claims

1. A joining device (10) for parts of furniture and furnishing accessories, of the shelf unit, bookcase, drawer unit, bed frame, seating type and the like, comprising a casing or container body (11) suitable for being inserted in a seat (66) formed in one of the components of the item of furniture to be joined and provided with an expansion bushing (30) externally projecting with respect to a first end or front end (90) of said casing or container body and suitable for engaging with a further seat (68) of a further component of the item of furniture to be joined to the component wherein the casing or container body (11) is inserted, wherein said joining device comprises a cam mechanism (40) for a linear motion of actuation means co-operating in an expansion and retraction deformation movement of the expansion bushing (30) and simultaneous expansion of at least one portion (15) of said casing or container body (11), with said cam mechanism and actuation means housed in the casing or container body (11) and actuated by a tool (50),
wherein said actuation means comprise a slider (20), driven in translation by said cam mechanism (40), to which slider said expansion bushing (30) is made integral, co-operating with a wedge-shaped protuberance (13) of the casing or container body (11) for its simultaneous expansion and retraction movement, said slider (20) having a wedge-shaped rear part (26) for the expansion of said at least one portion (15) of said casing or container body (11) following its linear movement, and wherein the cam mechanism (40) comprises a central section (43) with cam profile, apt to house in a seat (27) of the slider (20) and to come into contact with axially opposed shoulders (28, 29) of the slider,
**characterised in that** the casing or container body (11) comprises a first half-shell (12) and a second half-shell (14), each having a respective through opening or hole (18, 18') formed in a perpendicular direction to the longitudinal axis of said half-shells and coaxial with a slot (21) of the slider (22) provided in said seat (27), said holes (18, 18') being suitable for housing, respectively, an upper section (42) and a lower section (41) of the cam mechanism (40) and for supporting the rotation of said cam mechanism.

2. Joining device according to claim 1, **characterised in that** said cam mechanism (40) comprises a seat (44), shaped to allow the introduction of the tool (50) apt to actuate the rotation of said cam mechanism (40).

3. Joining device according to claim 1 or 2, **characterised in that** said expansion bushing (30) has a substantially cylindrical shank (31) in which a slot (32) is formed, apt to be engaged by a protuberance (25) of the slider (20), or alternatively a protuberance of the bushing (30) apt to engage in a slot provided in the slider (20).

4. Joining device according to claim 3, **characterised in that** from the shank (31) of the expansion bushing (30) a pair of lateral wings (33) project at the front, distanced so as to define an empty space (34) apt to receive said protuberance (13) of the container body (11), respective thickened portions (35) with outer teeth (37) being provided frontally to the wings (33).

5. Joining device according to claim 4, **characterised in that** respective flexible tabs (38) are provided on said wings (33) of the expandable bushing (30).

6. Joining device according to claim 5, **characterised in that** said second half-shell (14) has side walls with a circular profile (17) with a window (16) for the housing of opposite lateral protuberances (23) provided at the sides of said slot (21) of the slider (20).

7. The joining device according to any one of the preceding clams, wherein said at least one expansion portion (15) comprises a pair of externally serrated opposite wings (15) oriented towards the front end (90) or rear end (91) of the container body (11) and having entrance chamfers (93) for the widening by means of a wedge (26) provided to the rear of the slider (20).

8. Method of joining of parts of modular furniture (60) or furnishing accessories by means of the joining device (10) according to any one of the preceding claims, **characterised in that** it comprises the steps of:
- insertion of the joining device (10) in a groove or pocket (66) formed in the thickness of one of the components to be joined, with the front portion of the bushing (30) projecting outside said groove or pocket (66) and inserted in a further pocket (68) formed in the thickness of the other component to be joined;
- rotational actuation of the cam mechanism (30) to exert a thrust action on the slider (20) and to impose an expansion and retraction of the bushing to exert an action of radial pressure and of traction on the lateral surface of said groove or pocket (68) and simultaneous expansion of said at least one portion (15) of the casing or container body (11).

## Patentansprüche

1. Verbindungsvorrichtung (10) für Möbelteile und Einrichtungszubehör, von Regaleinheit, Bücherregal, Schubladeneinheit, Bettgestell, Sitzgelegenheiten und dergleichen, umfassend ein Gehäuse oder Behälterkörper (11), das/der geeignet ist, in einen Sitz (66) eingesetzt zu werden, der in einer der Komponenten des zusammenzusetzenden Einrichtungsgegenstands gebildet ist und mit einer Dehnungsbuchse (30) versehen ist, die außen in Bezug auf ein erstes Ende oder vorderes Ende (90) des Gehäuses oder Behälterkörpers vorsteht und geeignet ist für einen Eingriff mit einem weiteren Sitz (68) einer weiteren Komponente des Einrichtungsgegenstands, die mit der Komponente verbunden werden soll, in welche das Gehäuse oder der Behälterkörper (11) eingeführt wird, wobei die Verbindungsvorrichtung einen Nockenmechanismus (40) für eine lineare Bewegung einer Betätigungseinrichtung aufweist, die in einer Dehnungs- und Rückzugs-Verformungsbewegung der Dehnungsbuchse (30) und gleichzeitiger Dehnung mindestens eines Abschnitts (15) des Gehäuses oder Behälterkörpers (11) mit dem Nockenmechanismus und der Betätigungseinrichtung zusammenwirkt, die in dem Gehäuse oder Behälterkörper (11) untergebracht sind und durch ein Werkzeug (50) betätigt werden,
wobei die Betätigungseinrichtung einen Schieber (20) aufweist, der translatorisch von dem Nockenmechanismus (40) angetrieben wird und mit dem die Dehnungsbuchse (30) integral gefertigt ist, die mit einem keilförmigen Vorsprung (13) des Gehäuses oder Behälterkörpers (11) für ihre gleichzeitige Dehnungs- und Rückzugsbewegung zusammenwirkt, wobei der Schieber (20) einen keilförmigen hinteren Teil (26) für die Dehnung des mindestens einen Abschnitts (15) des Gehäuses oder Behälterkörpers (11) folgend seiner linearen Bewegung hat, und
wobei der Nockenmechanismus (40) einen mittleren Bereich (43) mit Nockenprofil aufweist, passend für die Unterbringung in einem Sitz (27) des Schiebers (20) und in Kontakt zu kommen mit axial gegenüberliegenden Schultern (28, 29) des Schiebers,
**dadurch gekennzeichnet, dass** das Gehäuse oder der Behälterkörper (11) eine erste Halbschale (12) und eine zweite Halbschale (14) aufweist, die jeweils eine entsprechende Durchgangsöffnung oder Loch (18, 18') haben, die/das in einer senkrechten Richtung zur Längsachse der Halbschalen und koaxial zu einem Schlitz (21) des Schiebers (22) gebildet ist, der in dem Sitz (27) vorgesehen ist, wobei die Löcher (18, 18') geeignet sind, um jeweils einen oberen Bereich (42) und einen unteren Bereich (41) des Nockenmechanismus (40) aufzunehmen und die Drehung des Nockenmechanismus zu unterstützen.

2. Verbindungsvorrichtung nach Anspruch 1, **dadurch gekennzeichnet, dass** der Nockenmechanismus (40) einen Sitz (44) aufweist, der so geformt ist, dass er das Einbringen des Werkzeugs (50) ermöglicht, passend für die Betätigung der Drehung des Nockenmechanismus (40).

3. Verbindungsvorrichtung nach Anspruch 1 oder 2, **dadurch gekennzeichnet, dass** die Dehnungsbuchse (30) einen im Wesentlichen zylindrischen Schaft (31) hat, in welchem ein Schlitz (32) gebildet ist, passend für den Eingriff durch einen Vorsprung (25) des Schiebers (20) oder alternativ einen Vorsprung der Buchse (30), passend für den Eingriff in einen Schlitz, der in dem Schieber (20) vorgesehen ist.

4. Verbindungsvorrichtung nach Anspruch 3, **dadurch gekennzeichnet, dass** von dem Schaft (31) der Dehnungsbuchse (30) ein Paar seitliche Flügel (33) vorne vorstehen, die so beabstandet sind, dass sie einen leeren Raum (34) definieren, passend für die Aufnahme des Vorsprungs (13) des Behälterkörpers (11), wobei entsprechende verdickte Abschnitte (35) mit äußeren Zähnen (37) frontal an den Flügeln (33) vorgesehen sind.

5. Verbindungsvorrichtung nach Anspruch 4, **dadurch gekennzeichnet, dass** entsprechende flexible Laschen (38) an den Flügeln (33) der dehnbaren Buchse (30) vorgesehen sind.

6. Verbindungsvorrichtung nach Anspruch 5, **dadurch gekennzeichnet, dass** die zweite Halbschale (14) Seitenwände mit einem kreisförmigen Profil (17) mit einem Fenster (16) für die Unterbringung von gegenüberliegenden seitlichen Vorsprüngen (23) hat, welche an den Seiten des Schlitzes (21) des Schiebers (20) vorgesehen sind.

7. Verbindungsvorrichtung nach einem der vorhergehenden Ansprüche, wobei der mindestens eine Dehnungsabschnitt (15) ein Paar außen gezahnte gegenüberliegende Flügel (15) aufweist, die in Richtung des vorderen Endes (90) oder hinteren Endes (91) des Behälterkörpers (11) ausgerichtet sind und Eintrittsschrägen (93) für das Weiten mittels eines Keils (26) aufweisen, welcher hinten am Schieber (20) angeordnet ist.

8. Verfahren zum Verbinden von Teilen von modularen Möbeln (60) oder Einrichtungszubehör mittels der Verbindungsvorrichtung (10) nach einem der vorhergehenden Ansprüche, **dadurch gekennzeichnet, dass** es die folgenden Schritte aufweist:
- Einführen der Verbindungsvorrichtung (10) in eine Nut oder Tasche (66), die in der Dicke einer der zu verbindenden Komponenten gebildet ist, wobei der vordere Abschnitt der Buchse (30) außerhalb der Nut oder Tasche (66) vorsteht und in eine weitere Tasche (68) eingeführt ist, die in der Dicke der anderen zu verbindenden Komponente gebildet ist;
- Drehbetätigung des Nockenmechanismus (30), um eine Schubwirkung auf den Schieber (20) auszuüben und der Buchse eine Dehnung und Rückzug aufzuerlegen, um eine radiale Druck- und Zugwirkung auf die seitliche Fläche der Nut oder Tasche (68) und gleichzeitige Dehnung des mindestens einen Abschnitts (15) des Gehäuses oder Behälterkörpers (11) auszuüben.

## Revendications

1. Dispositif d'assemblage (10) de pièces de meubles et d'accessoires d'ameublement, du type élément d'étagère, bibliothèque, élément de tiroir, cadre de lit, siège et autres, comprenant un corps de logement ou de contenant (11) approprié pour être inséré dans un siège (66) ménagé dans l'un des composants de l'article de meuble à assembler et doté d'une douille à expansion (30) dépassant de manière externe par rapport à une première extrémité ou extrémité avant (90) dudit corps de logement ou de contenant et appropriée pour s'engager avec un autre siège (68) d'un autre composant de l'article de meuble à assembler avec le composant où le corps de logement ou de contenant (11) est inséré, où ledit dispositif d'assemblage comprend un mécanisme de came (40) pour un mouvement linéaire d'un moyen d'actionnement coopérant dans le cadre d'un mouvement de déformation par expansion et rétractation de la douille à expansion (30) et d'une expansion simultanée d'au moins une partie (15) dudit corps de logement ou de contenant (11), avec ledit mécanisme de came et ledit moyen d'actionnement logés dans le corps de logement ou de contenant (11) et actionnés par un outil (50),
où ledit moyen d'actionnement comprend un élément de coulissement (20), entraîné en translation par ledit mécanisme de came (40), sur lequel élément de coulissement ladite douille à expansion (30) est formée de manière solidaire, coopérant avec une protubérance en forme de coin (13) du corps de logement ou de contenant (11) pour son mouvement d'expansion et de rétractation simultané, ledit élément de coulissement (20) présentant une partie arrière en forme de coin (26) pour l'expansion de ladite au moins une partie (15) dudit corps de logement ou de contenant (11) après son mouvement linéaire, et où le mécanisme de came (40) comprend une section centrale (43) ayant un profil de came, en mesure de loger dans un siège (27) de l'élément de coulissement (20) et de venir au contact d'épaulements axialement opposés (28, 29) de l'élément de coulissement,
**caractérisé en ce que** le corps de logement ou de contenant (11) comprend une première demi-coque (12) et une seconde demi-coque (14), chacune présentant un orifice ou trou traversant respectif (18, 18') ménagé selon une direction perpendiculaire à l'axe longitudinal desdites demi-coques et coaxial avec une fente (21) de l'élément de coulissement (22) prévue dans ledit siège (27), lesdits trous (18, 18') étant appropriés pour loger, respectivement, une section supérieure (42) et une section inférieure (41) du mécanisme de came (40) et pour supporter la rotation dudit mécanisme de came.

2. Dispositif d'assemblage selon la revendication 1, **caractérisé en ce que** ledit mécanisme de came (40) comprend un siège (44), façonné pour permettre l'introduction de l'outil (50) en mesure d'actionner la rotation dudit mécanisme de came (40).

3. Dispositif d'assemblage selon la revendication 1 ou 2, **caractérisé en ce que** ladite douille à expansion (30) présente une queue sensiblement cylindrique (31) dans laquelle est formée une fente (32), en mesure d'être engagée par une protubérance (25) de l'élément de coulissement (20), ou en variante une protubérance de la douille (30) en mesure de s'engager dans une fente ménagée dans l'élément de coulissement (20).

4. Dispositif d'assemblage selon la revendication 3, **caractérisé en ce que**, à partir de la queue (31) de la douille à expansion (30), une paire d'ailettes latérales (33) font saillie au niveau de l'avant, séparées d'une certaine distance permettant de définir un espace vide (34) en mesure de recevoir ladite protubérance (13) du corps de contenant (11), des parties épaissies respectives (35) avec des dents extérieures (37) étant prévues de manière frontale par rapport aux ailettes (33).

5. Dispositif d'assemblage selon la revendication 4, **caractérisé en ce que** des pattes flexibles respectives (38) sont prévues sur lesdites ailettes (33) de la douille à expansion (30).

6. Dispositif d'assemblage selon la revendication 5, **caractérisé en ce que** ladite seconde demi-coque (14) présente des parois latérales ayant un profil circulaire (17) avec une fenêtre (16) pour loger des protubérances latérales opposées (23) prévues au niveau des côtés de ladite fente (21) de l'élément de coulissement (20).

7. Dispositif d'assemblage selon l'une quelconque des revendications précédentes, dans lequel ladite au moins une partie d'expansion (15) comprend une paire d'ailettes opposées crénelées de manière externe (15) orientées vers l'extrémité avant (90) ou l'extrémité arrière (91) du corps de contenant (11) et présentant des chanfreins d'entrée (93) pour l'élargissement au moyen d'un coin (26) prévu sur la partie arrière de l'élément de coulissement (20).

8. Procédé d'assemblage de pièces de meubles modulaires (60) ou d'accessoires d'ameublement au moyen du dispositif d'assemblage (10) selon l'une quelconque des revendications précédentes, **caractérisé en ce qu'**il comprend les étapes suivantes :
- insertion du dispositif d'assemblage (10) dans une rainure ou une cavité (66) ménagée dans l'épaisseur d'un des composants à assembler, la partie avant de la douille (30) dépassant à l'extérieur de ladite rainure ou cavité (66) et étant insérée dans une autre cavité (68) ménagée dans l'épaisseur de l'autre composant à assembler ;
- actionnement par rotation du mécanisme de came (30) de sorte à exercer une action de poussée sur l'élément de coulissement (20) et à imposer une expansion et une rétractation de la douille pour exercer une action de pression radiale et de traction sur la surface latérale de ladite rainure ou cavité (68) et une expansion simultanée de ladite au moins une partie (15) du corps de logement ou de contenant (11).
